# EUROPÄISCHE PATENTSCHRIFT

(11) **EP 0 898 515 B1**
(45) Veröffentlichungstag und Bekanntmachung des Hinweises auf die Patenterteilung: **12.04.2000**
(21) Anmeldenummer: 97923974.6
(22) Anmeldetag: 22.05.1997
(51) Int. Cl.: B60B 17/00

(54) **LEICHTSCHEIBENRAD MIT EINER BEIDSEITIG ÜBER GROSSE BÖGEN IN RADNABE UND RADKRANZ ÜBERGEHENDEN SCHEIBE MIT SYMMETRISCHEM AUFBAU**
LIGHT-ALLOY SOLID WHEEL WITH A WHEEL DISC OF SYMMETRICAL STRUCTURE MERGING ON BOTH SIDES AND OVER LARGE CURVES INTO A WHEEL HUB AND WHEEL RIM
ROUE A VOILE PLEIN EN ALLIAGE LEGER A DISQUE DE STRUCTURE SYMETRIQUE SE CONVERTISSANT DE PART ET D'AUTRE EN MOYEU DE ROUE ET EN JANTE PAR L'INTERMEDIAIRE DE COURBES IMPORTANTES

(30) Priorität: 23.05.1996 DE 19620902
(43) Veröffentlichungstag der Anmeldung: 03.03.1999
(73) Patentinhaber: Bochumer Verein Verkehrstechnik GmbH, 44793 Bochum (DE)
(72) Erfinder: MURAWA, Franz, D-44805 Bochum (DE); SCHNEIDER, Jürgen, D-44797 Bochum (DE)
(74) Vertreter: Cohausz & Florack
(86) Internationale Anmeldenummer: EP9702613
(87) Internationale Veröffentlichungsnummer: WO9744204

(56) Entgegenhaltungen:
- EP-A- 0 047 385
- DE-A- 2 346 144
- DE-A- 3 119 959
- DE-A- 4 444 077
- DE-C- 3 316 759

## Beschreibung

Bei herkömmlichen Scheibenrädern für Schienenfahrzeuge werden durch die im Kontaktbereich Rad/Schiene wirkenden Wechselkräfte eine Vielzahl von Resonanzfrequenzen angeregt. Dabei schwingt der Radkranz in radialer Richtung, während gleichzeitig die Radscheibe wie eine Membrane in axialer Richtung schwingt. Diese Membranschwingungen wirken sich wie bei einem Lautsprecher in der Intensität der Schallabstrahlung besonders stark aus. Die dabei entstehende Schallabstrahlung ist insbesondere im Hochgeschwindigkeitsbereich von ca. 200 km/h entsprechend groß.

Zur Reduzierung der Schallabstrahlung eines Schienenrades ist es bekannt, an der Unterseite des Radkranzes Absorber, insbesondere Resonanzabsorber, anzubringen. Dafür ist in der Unterseite eine hinterschnittene umlaufende Nut vorgesehen, in der mit Hammerkopfschrauben die anzubringenden Resonanzabsorber verankert sind. In der Praxis hat sich gezeigt, daß die mit der Nut in der Unterseite des Radkranzes verbundene Verminderung der Festigkeit für die Standzeit des Rades nachteilig ist (Hölzl, Georg: Das leise Rad. In: Die Deutsche Bahn 1993, Nr. 3, Seiten 229 - 232). Aus diesen Gründen ist in der Praxis der Radkr nz an der Unterseite, wo die Nut zum Befestigen der Absorber vorgesehen ist, verstärkt. In der Regel ist diese Verstärkung aus Kostengründen und aus Gründen der Gewichtseinsparung aber nur einseitig verwirklicht. Es hat sich jedoch gezeigt, daß die damit einhergehende Unsymmetrie des Radkranzes das Schwingungsverhalten des Rades negativ beeinflußt. Insbesondere werden die axialen Membranschwingungen angeregt.

Darüber hinaus ist aus der DE-A-4444077 (Offenlegungstag:13.06.96) ein Einscheibenschienenrad bekannt, welches zur Vermeidung von örtlichen Spannungsspitzen eine Radnabe und Radkranz verbindende Radscheibe hat, die eine von der Radnabe zum Radkranz abnehmende Dicke hat und deren Außenseiten über Korbbögen als radial verlaufende Erzeugende in die benachbarten Außenseiten der Radscheibe und des Radkranzes tangential übergehen. Mittel zur Reduzierung des Schalls sind bei diesem Rad nicht vorgesehen.

Aufgabe der Erfindung ist es, ein verbessertes, schallarmes Leichtscheibenrad zu schaffen.

Die Lösung dieser Aufgabe besteht bei einem Leichtscheibenrad mit einer beidseitig über große Bögen in Radnabe und Radkranz übergehenden Scheibe in folgenden Merkmalen:
1. Die Scheibe hat zu einer radialen bis leicht geneigten Mittelebene bis in den Bereich der Bögen einen symmetrischen Aufbau.
2. Das Verhältnis der Dicken der Scheibe im radkranznahen Bereich zum nabennahen Bereich beträgt 1 : 1,5 bis 2,5.
3. Die kleinste Dicke der Scheibe liegt in einem Abstand von 3/4 bis 5/6 des Abstandes des radkranznahen Bogenbereichs vom nabennahen Bogenbereich.
4. Der Radkranz weist an mindestens einer Unterseite eine umlaufende Verstärkung mit daran befestigten Schwingungsabsorbern auf, die vom Bereich des benachbarten Bogens durch eine umlaufende Hinterschneidung entkoppelt ist.

Die besondere Formgebung der Scheibe des Rades in Kombination mit den an der entkoppelten Verstärkung des Radkranzes angekoppelten Schwingungsabsorbern sorgen dafür, daß einerseits die axialen Membranschwingungen der Radscheibe weitgehend unterdrückt und andererseits die Radialschwingungen des Radkranzes durch die in an sich bekannter Weise auf die Frequenzen des Radkranzes abgestimmten Schwingungsabsorber gedämpft werden. Vor allem wirkt sich die Verstärkung insbesondere bei einseitiger Anordnung am Radkranz wegen der Entkoppelung nicht negativ aus, so daß die Anzahl der für die Schallemission ausschlaggebenden Schwingungsmoden im Vergleich zu herkömmlichen Leichtscheibenrädern reduziert ist. Im Ergebnis wird mit dem erfindungsgemäßen Leichtscheibenrad bei Fahrgeschwindigkeiten von rd. 200 km/h eine Schallpegelreduzierung von über 6 db(A) erreicht.

Der symmetrische Aufbau der Scheibe mit den großen Übergangsbögen, der für die Unterdrückung der Membranschwingungen verantwortlich ist, sollte sich möglichst bis in den Nabenbereich fortsetzen. Auch bis in den Radkranzbereich, wo der symmetrische Aufbau wegen des Spurkranzes und der Verstärkung nicht vollkommen zu realisieren ist, sollte er sich im wesentlichen fortsetzen. Besonders vorteilhaft ist es, wenn die Verstärkung mit den Schwingungsabsorbern auf der dem Spurkranz gegenüberliegenden Seite vorgesehen ist, weil auf diese Art und Weise eine gewisse Kompensation der Asymmetrie erreicht werden kann.

Obgleich es für den symmetrischen Aufbau am vorteilhaftesten ist, wenn die Verstärkung mit den Schwingungsabsorbern auf der der Seite des Spurkranzes gegenüberliegenden Seite angeordnet ist, kann es ausnahmsweise bei besonders starker Anregung der Radialschwingung des Spurkranzes günstiger sein, wenn möglichst viele Schwingungsabsorber vorgesehen sind. In diesem Fall können sie auf beiden Seiten der Radscheibe angeordnet sein. Auch bei dieser Ausgestaltung kann der Einfluß der Verstärkung und der Schwingungsabsorber auf das Schwingungsverhalten der Radscheibe durch die erwähnte entkoppelnde Hinterschneidung gemindert werden.

Weitere vorteilhafte Ausgestaltungen insbesondere bezüglich der Dimensionierung der Verstärkung sind in den abhängigen Anspruchen 4 bis 10 gekennzeichnet.

Im folgenden wird die Erfindung anhand einer Zeichnung näher erläutert, die verschiedene Ausführungsbeispiele darstellt. Im einzelnen zeigen:
- Fig. 1: ein Leichtscheibenrad mit außenseitig angeordneten Schwingungsabsorbern im halben radialen Querschnitt,
- Fig. 2: das Leichtscheibenrad gemäß Fig. 1 in vergrößerter Darstellung im Bereich des Radkranzes im Querschnitt,
- Fig. 3: ein Leichtscheibenrad mit innenseitig angeordneten Schwingungsabsorbern im halben radialen Querschnitt,
- Fig. 4: ein Leichtscheibenrad mit beidseitig angeordneten Schwingungsabsorbern im halben radialen Querschnitt,
- Fig. 5: ein Leichtscheibenrad in einer zur Fig. 1 abgewandelten Ausführung in vergrößerter Darstellung im Bereich des Radkranzes ausschnittweise im Querschnitt,
- Fig. 6: ein Leichtscheibenrad in einer zur Fig. 5 abgewandelten Ausführung in vergrößerter Darstellung im Bereich des Radkranzes ausschnittweise im Querschnitt, und
- Fig. 7: ein Leichtscheibenrad in einer zur Fig. 5 und 6 abgewandelten Ausführung in vergrößerter Darstellung im Bereich des Radkranzes ausschnittweise im Querschnitt.

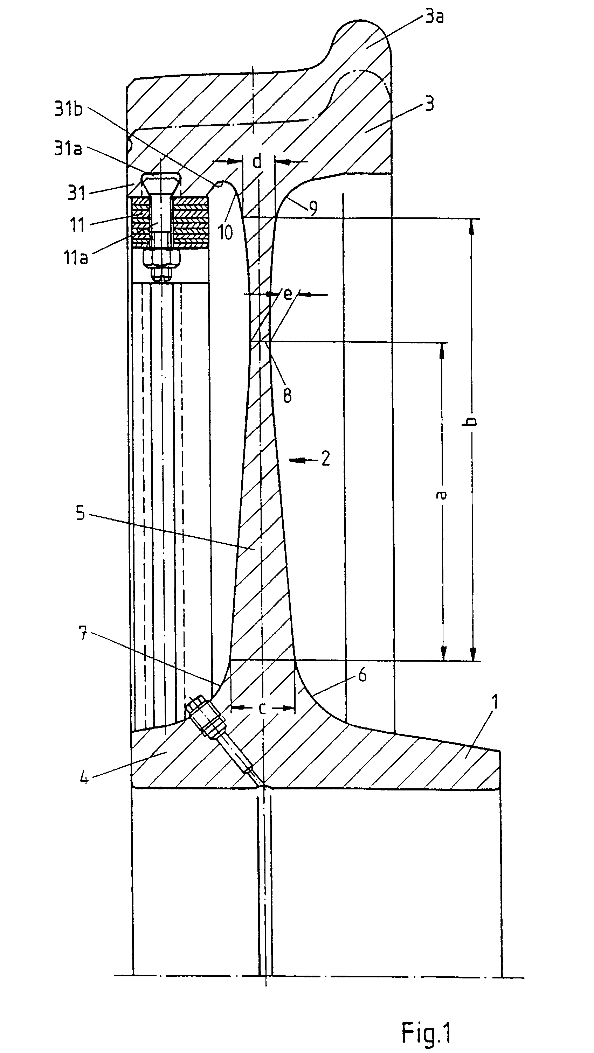

Die maßstabgerecht dargestellten Leichtscheibenräder gemäß den Figuren 1 bis 3 haben bis auf die Anordnung der Schwingungsabsorber den gleichen Aufbau. Sie sind einstückig und weisen eine Radnabe 1, eine Radscheibe 2 und einen Radkranz 3 auf. Durch eine strichpunktierte Linie im Bereich des Radkranzes 3 ist angedeutet, daß das Rad nach Verschleiß neu profiliert werden kann. Im Bereich der Radnabe 1 ist eine verschließbare Bohrung 4 vorgesehen, über die ein Druckmittel zugeführt werden kann, um das Abziehen des auf einer nicht dargestellten Welle sitzenden Rades zu erleichtern.

Die Radscheibe 2 hat bezüglich einer radialen Mittelebene 5 einen symmetrischen Aufbau. Sie kann eine Neigung bis zu 15° haben. Über große Bögen 6, 7 geht die Radscheibe 2 in die Radnabe 1 über. Auch in den Bereichen dieser Bögen 6, 7 ist ein symmetrischer Aufbau gegeben. Im Bereich dieser Bögen 6, 7 hat die Radscheibe 2 auch ihre größte Dicke. Diese Dicke vermindert sich in radialer Richtung nach außen kontinuierlich bis zu einer dünnsten Stelle 8, die in einem Abstand a von 3/4 bis 5/6 des Abstandes b der Bögen 6, 7 von gegenüberliegenden Bögen 9, 10 am Radkranz liegt. Das Verhältnis der Dicke d der Scheibe 2 im Bereich der Fußpunkte der Bögen 9, 10 zu der im Bereich der Bögen 6, 7 liegt bei 1 : 1,5 bis 2,5. Die Dicke e der dünnsten Stelle 8 liegt bei 1/5 bis 2/5 der Dicke im Bereich der Bögen 6, 7. Diese Maße sind jeweils auf die Fußpunkte der Bögen 6, 7, 9, 10 bezogen.

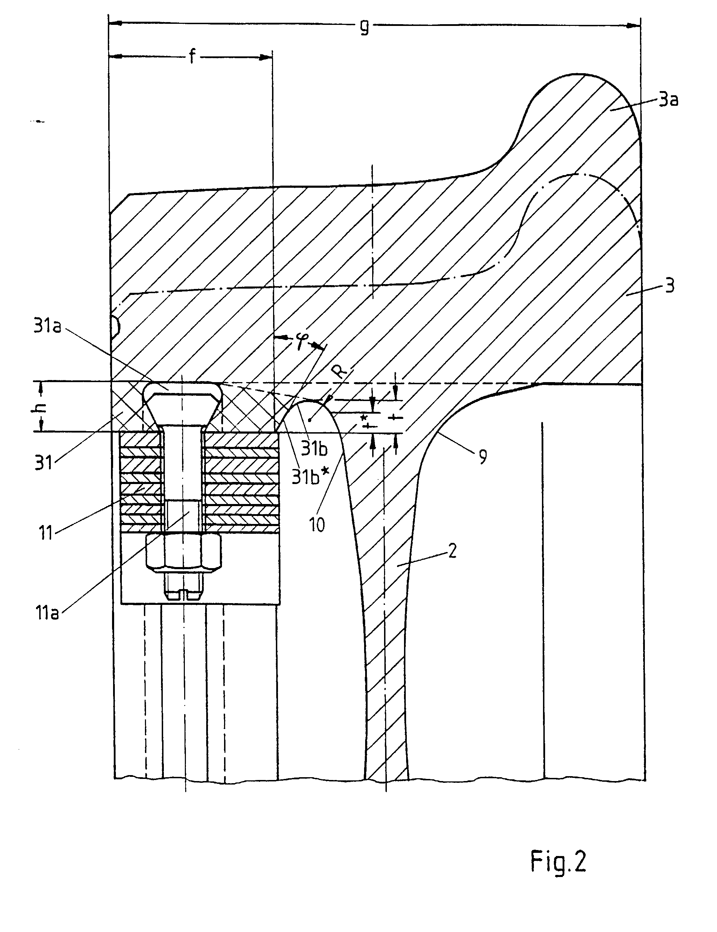

Der Radkranz 3 des Rades gemäß Fig. 1 weist an seiner dem Spurkranz 3a gegenüberliegenden der Nabe zugewandten Seite eine Verstärkung 31 auf. An dieser Verstärkung 31 sind über den Umfang verteilt an sich bekannte Schwingungsabsorber 11 befestigt, die sich in an sich bekannter Weise aus verschiedenen frei schwingenden Zungen und zwischen ihnen angeordnetem Dämpfungsmaterial zusammensetzen. Diese Schwingungsabsorber 11 sind auf die radialen Schwingungsfrequenzen des Radkranzes 3 abgestimmt. Wie vor allem Fig. 2 deutlich zeigt, ist die Verstärkung 31 auf der radialen Innenseite des hier durch eine gestrichelte Linie begrenzten Radkranzes 3 angeordnet. Die gestrichelte Linie verläuft etwa symmetrisch zu der Innenseite des Radkranzes 3 auf der Spurkranzseite. Die Verstärkung 31 ist durch eine hinterschnittene Nut 31b von der Radscheibe 2 schwingungsmäßig entkoppelt. In der Verstärkung 31 ist eine Nut 31a angeordnet, in der mittels Hammerkopfschrauben 11a die Schwingungsabsorber 11 befestigt sind.

Die Dimensionierung der Verstärkung 31 ist beim Ausführungsbeispiel wie folgt:

Die Verstärkung 31 hat eine Breite f von 1/4 bis 1/3 der Breite g des Radkranzes 3. Sie hat eine radiale Höhe h von mindestens 3/10 und höchstens 5/10 der Breite f der Verstärkung. Die Hinterschneidung 31b hat eine Tiefe t von mindestens 1/2 bis maximal 1 der Höhe h der Verstärkung 31. Der Krümmungsradius R des Grundes der Hinterschneidung 31b beträgt 1/10 bis 1/25 der Breite g des Radkranzes 3. Die der Radscheibe 2 gegenüberliegende Flanke 31b* der Vertiefung 31b schließt mit einer Radialebene des Rades einen Winkel φ von 0 bis 30° ein. Der Übergangsbogen 10 läuft von der Radscheibe 2 in die Hinterschneidung 31b bis mindestens zu einer Tiefe t* von 1/2 der Tiefe t der Hinterschneidung 31b ein.

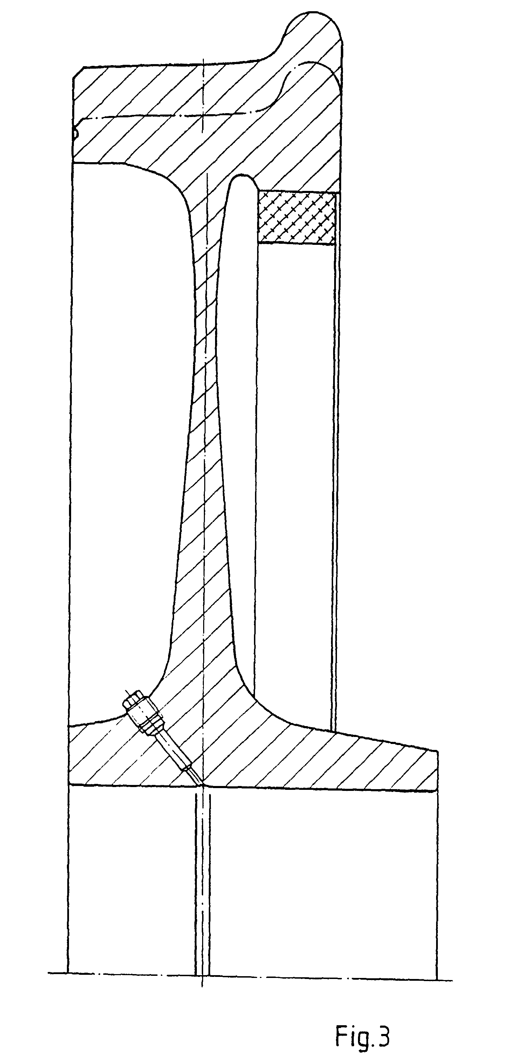

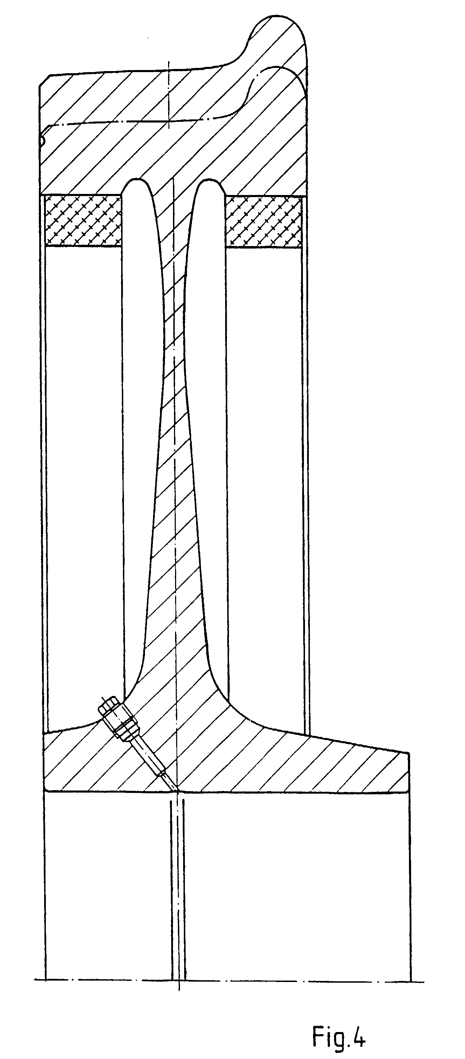

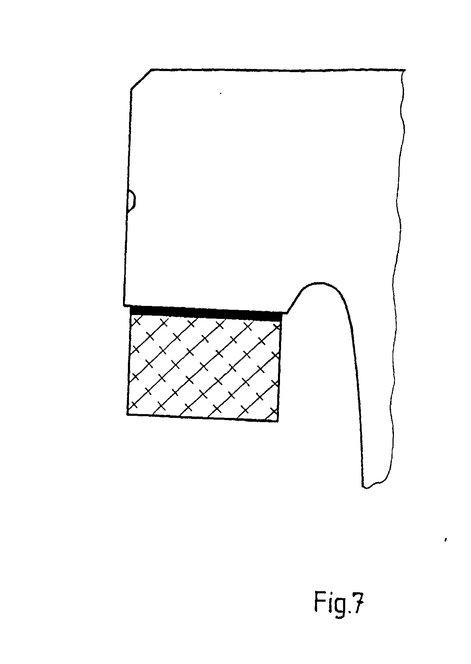

Das Ausführungsbeispiel der Fig. 3 unterscheidet sich vom Ausführungsbeispiel der Fig. 1 vor allem darin, daß die Schwingungsabsorber auf der Spurkranzseite angeordnet sind. Beim Ausführungsbeispiel der Fig. 4 sind die Schwingungsabsorber auf beiden Radscheibenseiten angeordnet. Darüber hinaus ist angedeutet, daß die Schwingungsabsorber nicht über Schrauben, sondern durch Klebung befestigt sind. In Fig. 7 ist diese Befestigungsart mit einer Klebeschicht noch deutlicher dargestellt.

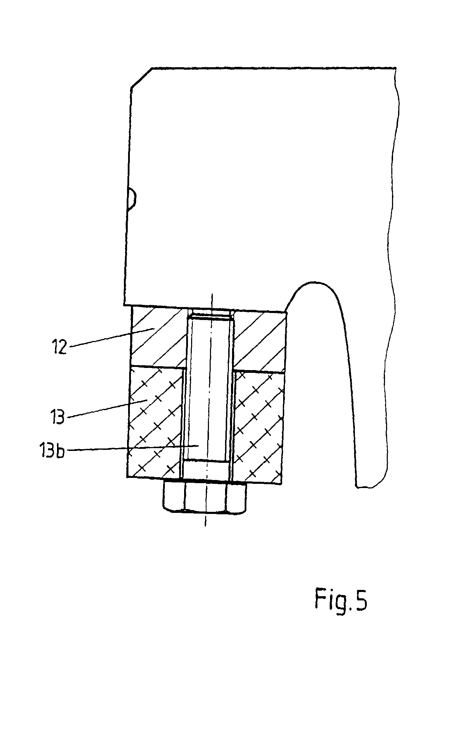

Beim Ausführungsbeispiel der Fig. 5 ist ein eingeschrumpfter Haltering 12 vorgesehen, an dem Schwingungsabsorber 13 mit Schraubenbolzen 13b angeschraubt sind.

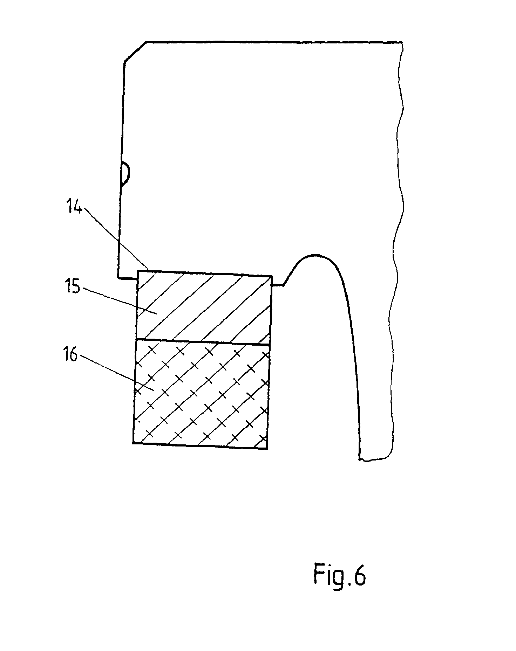

Beim Ausführungsbeispiel der Fig. 6 ist in einer Nut 14 der Verstärkung ein Haltering 15, insbesondere ein Sprengring, eingeklemmt, an dem Schwingungsabsorber 16 befestigt sind. Die Befestigung kann, wie dargestellt, aus einer Klebung bestehen, sie kann aber auch mit Schrauben verwirklicht sein.

## Patentansprüche

1. Leichtscheibenrad mit einer beidseitig über große Bögen (6, 7, 9, 10) in Radnabe (1) und Radkranz (3) übergehenden Radscheibe (2) mit folgenden Merkmalen:
1. Die Radscheibe (2) hat zu einer radialen bis leicht geneigten Mittelebene (5) bis in den Bereich der Bögen (6, 7, 9, 10) einen symmetrischen Aufbau;
2. Das Verhältnis der Dicke (d) des radkranznahen Bereichs zur Dicke (c) der Radscheibe (2) im nabennahen Bereich beträgt 1 : 1,5 bis 2,5;
3. Die kleinste Dicke (e) der Radscheibe (2) liegt in einem Abstand (a) von 3/4 bis 5/6 des Abstandes (b) des radkranznahen Bogenbereichs (9, 10) vom nabennahen Bogenbereich (6, 7);
4. Der Radkranz (3) weist an mindestens einer Unterseite eine umlaufende Verstärkung (31) mit daran befestigten Schwingungsabsorbern (11) auf, die vom benachbarten Bereich des Bogens (9,10) durch eine umlaufende Hinterschneidung (31b) entkoppelt ist.

2. Leichtscheibenrad nach Anspruch 1,
**dadurch gekennzeichnet**, daß der symmetrische Aufbau der Scheibe (2) sich bis in den Bereich der Radnabe (1) fortsetzt.

3. Leichtscheibenrad nach Anspruch 1 oder 2,
**dadurch gekennzeichnet**, daß die Verstärkung (31) mit den Schwingungsabsorbern (11) auf der dem Spurkranz (3a) gegenüberliegenden Seite angeordnet ist.

4. Leichtscheibenrad nach einem der Ansprüche 1 bis 3,
**dadurch gekennzeichnet**, daß die Verstärkung (31) eine Breite (f) von 1/4 bis 1/3 der Breite (g) des Radkranzes (3) hat.

5. Leichtscheibenrad nach einem der Ansprüche 1 bis 4,
**dadurch gekennzeichnet**, daß die Verstärkung (31) eine radiale Höhe h von mindestens 3/10 ihrer Breite (f) hat.

6. Leichtscheibenrad nach einem der Ansprüche 1 bis 5,
**dadurch gekennzeichnet**, daß die Verstärkung (31) eine radiale Höhe h von maximal 5/10 ihrer Breite (f) hat.

7. Leichtscheibenrad nach einem der Ansprüche 1 bis 6,
**dadurch gekennzeichnet**, daß die Hinterschneidung (31b) der Verstärkung (31) eine Tiefe (t) von mindestens 1/2 bis 1 der Höhe (h) der Verstärkung (31) hat.

8. Leichtscheibenrad nach einem der Ansprüche 1 bis 7,
**dadurch gekennzeichnet,** daß der Krümmungsradius (R) des Grundes der Hinterschneidung (31b) 1/10 bis 1/25 der Breite (g) des Radkranzes (3) beträgt.

9. Leichtscheibenrad nach einem der Ansprüche 1 bis 8,
**dadurch gekennzeichnet,** daß die der Radscheibe (2) gegenüberliegende Flanke (31b*) der Hinterschneidung (31b) mit einer Radialebene des Rades einen Winkel (φ) von 0 bis 30° einschließt.

10. Leichtscheibenrad nach einem der Ansprüche 1 bis 9,
**dadurch gekennzeichnet,** daß der Übergangsbogen (10) von der Radscheibe (2) in die Hinterschneidung (31b) bis mindestens zu einer Tiefe (t*) von 1/2 der Tiefe (t) der Hinterschneidung (31b) einläuft.

## Claims

1. A light disc wheel, having a wheel disc (2) merging via large arcs (6, 7, 9, 10) into the wheel hub (1) and the wheel rim (3) and having the following features:
1. the wheel disc (2) has as far as into the zone of the arcs (6, 7, 9, 10) a construction symmetrical in relation to a radial to slightly inclined central plane (5);
2. the ratio between the thickness (d) of the zone adjacent the wheel rim and the thickness (c) of the wheel disc (2) in the zone adjacent the hub is 1 : 1.5 to 2.5;
3. the minimum thickness (e) of the wheel disc (2) is situated at a distance (a) of 3/4 to 5/6 of the distance (b) of the arc zone (9, 10) adjacent the wheel rim from the arc zone (6, 7) adjacent the wheel hub;
4. on at least one underside the wheel rim (3) has a peripherally extending reinforcement (31) having vibration absorbers (11) attached thereto, which is decoupled by a peripherally extending undercut (31b) from the adjacent zone of the arc (9, 10).

2. A light disc wheel according to claim 1,
**characterised in that** the symmetrical construction of the wheel disc (2) is continued as far as into the zone of the wheel hub (1).

3. A light disc wheel according to claims 1 or 2,
**characterised in that** the reinforcement (31) having the vibration absorbers (11) is disposed on the side oppose the wheel flange (3a) .

4. A light disc wheel according to one of claims 1 to 3,
**characterised in that** the reinforcement (31) has a width (f) of 1/4 to 1/3 of the width (g) of the wheel rim (3).

5. A light disc wheel according to one of claims 1 to 4,
**characterised in that** the reinforcement (31) has a radial height h of at least 3/10 of its width (f).

6. A light disc wheel according to one of claims 1 to 5,
**characterised in that** the reinforcement (31) has a radial height h of at most 5/10 of its width (f).

7. A light disc wheel according to one of claims 1 to 6,
**characterised in that** the undercut (31b) of the reinforcement (31) has a depth (t) of at least 1/2 to 1 of the height (h) of the reinforcement (31).

8. A light disc wheel according to one of claims 1 to 7,
**characterised in that** the radius of curvature (R) of the bottom of the undercut (31b) is 1/10 to 1/25 of the width (g) of the wheel rim (3).

9. A light disc wheel according to one of claims 1 to 8,
**characterised in that** the flank (31b*) of the undercut (31b) opposite the wheel disc (2) encloses a angle (φ) of 0 to 30° with a radial plane of the wheel.

10. A light disc wheel according to one of claims 1 to 9,
**characterised in that** the transitional arc (10) of the wheel disc (2) extends into the undercut (31b) as far as at least a depth (t*) of 1/2 of the depth (t) of the undercut (31b).

## Revendications

1. Roue à disque léger comportant un disque de roue (2) qui se raccorde à un moyeu de roue (1) et à une jante de roue (3), sur les deux côtés, par des grands arcs (6, 7, 9, 10), roue ayant les caractéristiques suivantes :
1. Le disque de roue (2) est de construction symétrique, par rapport à un plan moyen (5) s'étendant radialement ou légèrement incliné, jusque dans la zone des arcs (6, 7, 9, 10) ;
2. le rapport de l'épaisseur (d) de la zone proche de la jante de roue à l'épaisseur (c) du disque de roue (2) dans la zone proche du moyeu de roue vaut 1 : 1,5 à 2,5;
3. l'épaisseur minimale (e) du disque de roue (2) se trouve à une distance (a) de 3/4 à 5/6 de la distance (b) de la zone d'arc proche de la jante de roue (9, 10) à la zone d'arc proche du moyeu de roue (6, 7) ;
4. la jante de roue (3) comporte sur au moins un côté inférieur un renforcement (31) faisant tout le tour et des absorbeurs d'oscillation (11) fixés sur ce dernier, renforcement qui est découplé de la zone d'arc voisine (9, 10) par une contre-dépouille (31 b) faisant tout le tour.

2. Roue à disque léger selon la revendication 1, caractérisée en ce que la construction symétrique du disque (2) se prolonge jusqu'à la zone du moyeu de roue (1).

3. Roue à disque léger selon la revendication 1 ou 2, caractérisée en ce que le renforcement (31) avec les absorbeurs d'oscillation (11) est disposé sur le côté opposé au boudin (3a).

4. Roue à disque léger selon l'une des revendications 1 à 3, caractérisée en ce que le renforcement (31) a une largeur (f) de 1/4 à 1/3 de la largeur (g) de la jante de roue (3).

5. Roue à disque léger selon l'une des revendications 1 à 4, caractérisée en ce que le renforcement (31) a une hauteur radiale (h) d'au moins 3/10 de sa largeur (f).

6. Roue à disque léger selon l'une des revendications 1 à 5, caractérisée en ce que le renforcement (31) a une hauteur radiale (h) d'au maximum 5/10 de sa largeur (f).

7. Roue à disque léger selon l'une des revendications 1 à 6, caractérisée en ce que la contre-dépouille (31b) du renforcement (31) a une profondeur (t) d'au moins 1/2 à 1 de la hauteur (h) du renforcement (31).

8. Roue à disque léger selon l'une des revendications 1 à 7, caractérisée en ce que le rayon de courbure (R) du fond de la contre-dépouille (31b) s'élève de 1/10 à 1/25 de la largeur (g) de la jante de roue (3).

9. Roue à disque léger selon l'une des revendications 1 à 8, caractérisée en ce que le flanc (31b*) de la contre-dépouille (31 b) qui est opposé au disque de roue (2) inclut un angle (φ) de 0 à 30° avec un plan radial de la roue.

10. Roue à disque léger selon l'une des revendications 1 à 9, caractérisée en ce que l'arc de transition (10) du disque de roue (2) à la contre-dépouille (31 b) s'étend au moins jusqu'à une profondeur (t*) de 1/2 de la profondeur (t) de la contre-dépouille (31b).
